# EUROPÄISCHE PATENTSCHRIFT

(11) **EP 2 714 462 B1**
(45) Veröffentlichungstag und Bekanntmachung des Hinweises auf die Patenterteilung: **06.04.2016**
(21) Anmeldenummer: 12717281.5
(22) Anmeldetag: 26.04.2012
(51) Int. Cl.: B60N 2/22, B60N 2/42, B60N 2/427, B60N 2/68

(54) **FAHRZEUGSITZ, INSBESONDERE KRAFTFAHRZEUGSITZ**
VEHICLE SEAT, IN PARTICULAR MOTOR VEHICLE SEAT
SIÈGE DE VÉHICULE, EN PARTICULIER SIÈGE DE VÉHICULE AUTOMOBILE

(30) Priorität: 24.05.2011 DE 102011102420
(43) Veröffentlichungstag der Anmeldung: 09.04.2014
(73) Patentinhaber: Johnson Controls Components GmbH & Co. KG, 67657 Kaiserslautern (DE)
(72) Erfinder: MARKEL, Christian, 55232 Alzey (DE); DILL, Thomas, 67699 Heiligenmoschel (DE); PLUTA, Wolfgang, 67699 Heiligenmoschel (DE); ENNS, Viktor, 67663 Kaiserslautern (DE); MUELLER, Gerhard, 67659 Kaiserslautern (DE)
(74) Vertreter: Finger, Catrin
(86) Internationale Anmeldenummer: PCT/EP2012/057633
(87) Internationale Veröffentlichungsnummer: WO 2012/159846

(56) Entgegenhaltungen:
- EP-A1- 2 123 506
- DE-A1- 19 807 581
- US-A- 5 507 553
- US-B2- 6 786 543

## Beschreibung

Die Erfindung betrifft einen Fahrzeugsitz, insbesondere einen Kraftfahrzeugsitz, mit den Merkmalen des Oberbegriffs des Anspruches 1.

Aus der DE 198 07 581 A1 ist ein Fahrzeugsitz der eingangs genannten Art bekannt. Der Beschlag ist mit dem ersten Beschlagteil an der Lehne befestigt und mit dem zweiten Beschlagteil zweifach mit dem Sitzteil verbunden, nämlich einerseits mittels eines Drehlagers und andererseits mittels eines die Deformationszone definierenden Deformationselements, welches bezüglich des Kraftflusses zwischen Lehne und Sitzteil parallel zum Drehlager, aber in Serie mit dem Beschlag liegt. Im Crashfall bewirkt das auf die Lehne ausgeübte Moment eine Drehung des zweiten Beschlagteils um das Drehlager bei gleichzeitiger Verformung des Deformationselementes zur Energiedissipation.

Die US 5,507,553 A beschreibt eine Notfallverriegelung für einen Fahrzeugsitz, bei dem ein an dem Sitzteil befestigtes Abstützelement im Crashfall mittels Scherbolzen mit einem an der Lehne befestigten Abstützelement verriegelbar ist.

Die US 6,786,543 B2 beschreibt einen Verstellmechanismus für einen Fahrzeugsitz, bei dem im Crashfall ein gezahntes und an der Lehne befestigtes Abstützelement gegen einen ebenfalls gezahnten Bereich eines an dem Sitzteil befestigten Abstützelements gepresst wird und so eine weitere ungewollte Relativbewegung zwischen Lehne und Sitzteil verhindert wird.

Der Erfindung liegt die Aufgabe zu Grunde, einen alternativen Fahrzeugsitz der eingangs genannten Art zu schaffen. Diese Aufgabe wird erfindungsgemäß durch einen Fahrzeugsitz mit den Merkmalen des Anspruches 1 gelöst. Vorteilhafte Ausgestaltungen sind Gegenstand der Unteransprüche.

Mittels der Abstützelemente wird im Crashfall ein zum Beschlag paralleler Weg für den Kraftfluss geschaffen, welcher den Beschlag entlastet. Dadurch kann bei Verwendung des gleichen Beschlags der Grenzwert der Belastung erhöht werden, d.h. die tragende Struktur kann dadurch höhere Belastungen aufnehmen. Sofern verschiedene Lastklassen von Beschlägen zur Verfügung stehen, kann alternativ bei gleichem Grenzwert der Belastung, also gleicher Sicherheit, ein Beschlag aus einer geringeren Lastklasse verwendet werden. Die Abstützelemente können auf einer Fahrzeugsitzseite vorgesehen sein, was beispielsweise bei Gurtintegralsitzen sinnvoll ist, oder auf beiden Fahrzeugsitzen, vorzugsweise mit spiegelsymmetrischer Ausbildung. Im Gegensatz zu vielen bekannten Crashsperren für Gurtschlösser löst nicht die Crashkraft im Sicherheitsgurt die Bildung des parallelen Weges für den Kraftfluss aus, sondern die Verformung der Deformationszone.

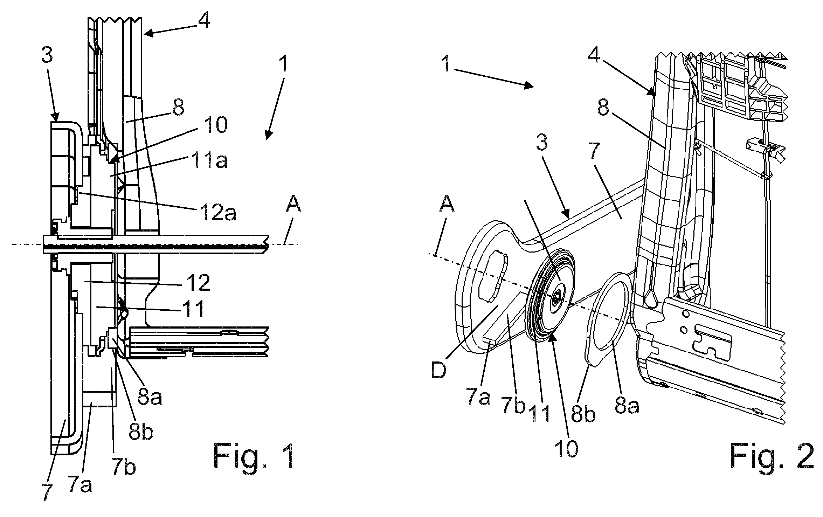

Im Folgenden ist die Erfindung anhand eines in der Zeichnung dargestellten Ausführungsbeispiels näher erläutert. Es zeigen
- Fig. 1: einen Schnitt durch einen Teil des Ausführungsbeispiels,
- Fig. 2: eine Fig. 1 entsprechende Explosionsdarstellung in perspektivischer Ansicht,

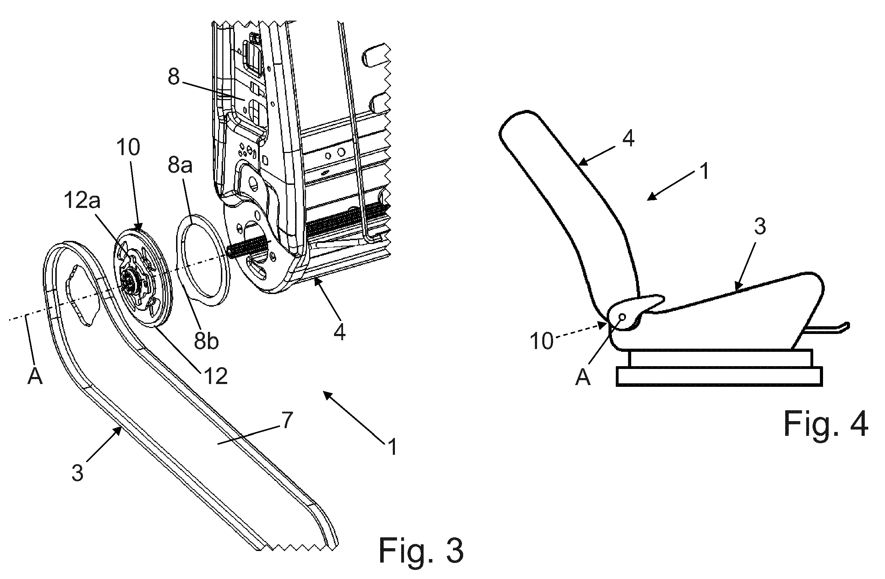

- Fig. 3: eine Fig. 2 entsprechende Explosionsdarstellung auf der spiegelsymmetrisch ausgebildeten anderen Fahrzeugsitzseite,
- Fig. 4: eine schematische Darstellung des Ausfuhrungsbeispiels,

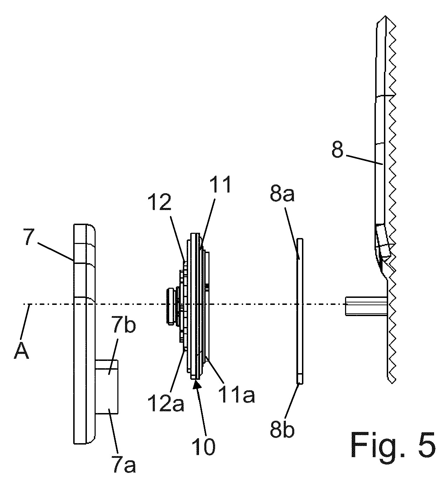

- Fig. 5: eine Fig. 1 entsprechende Explosionsdarstellung.

Ein Fahrzeugsitz 1 für ein Kraftfahrzeug weist ein Sitzteil 3 und eine Lehne 4 auf. Die Anordnung des Fahrzeugsitzes 1 innerhalb des Kraftfahrzeuges und dessen gewöhnliche Fahrtrichtung definieren die nachfolgend verwendeten Richtungsangaben. Auf beiden Fahrzeugsitzseiten weist der Fahrzeugsitz 1 als Teil der tragenden Struktur des Sitzteils 3 ein Sitzrahmenseitenteil 7 und Teil der tragenden Struktur der Lehne 4 einen Lehnenholm 8 auf, die jeweils mittels weitere Strukturbauteile mit den entsprechenden Teilen auf der gegenüberliegenden Fahrzeugsitzseite verbunden sind. Der Fahrzeugsitz 1 weist ebenfalls beidseitig Beschläge 10 auf, mittels deren die Lehne 4 am Sitzteil 3 angebracht und relativ zu diesem schwenkbar ist. Dabei ist auf jeder Fahrzeugsitzseite der Beschlag 10 einerseits am zugeordneten Sitzrahmenteil 7 und andererseits am Lehnenholm 8 befestigt.

Der Beschlag 10 weist ein erstes Beschlagteil 11 und ein zweites Beschlagteil 12 auf, die relativ zueinander verdrehbar sind. Der Beschlag 10 ist vorliegend als Rastbeschlag ausgebildet, wie er beispielsweise in der DE 20 2009 016 989 U1 beschrieben ist, deren diesbezüglicher Offenbarungsgehalt ausdrücklich einbezogen wird. Bei einem derartigen Beschlag 10 sind die beiden Beschlagteile 11 und 12 miteinander verriegelbar. Es ist aber auch möglich, als Beschlag 10 einen Getriebebeschlag zu verwenden, wie er beispielsweise (mit einem selbsthemmenden Exzenterumlaufgetriebe) in der DE 20 2009 017 811 U1 beschrieben ist, deren diesbezüglicher Offenbarungsgehalt ebenfalls ausdrücklich einbezogen wird. Ein derartiger Beschlag 10 wird angetrieben, um die Beschlagteile 11 und 12 relativ zueinander zu verdrehen, und sperrt letztere, wenn er nicht angetrieben wird.

Das erste Beschlagteil 11 ist fest mit dem Lehnenholm 8 verbunden, also lehnenfest. Der Lehnenholm 8 weist im Bereich der Befestigung des ersten Beschlagteils 11 ein lehnenfestes Abstützelement 8a auf, welches vorliegend ein gesondert vom Lehnenholm 8 ausgebildetes und am Lehnenholm 8 befestigtes Bauteil ist, alternativ aber auch am Lehnenholm 8 angeformt sein kann, d.h. einstückig mit diesem ausgebildet sein kann. Das lehnenfeste Abstützelement 8a ist vorliegend als Ring ausgebildet, welches (vorzugsweise formschlüssig) auf einem Ringabsatz 11a des ersten Beschlagteils 11 sitzt, und welches an einer Stelle seines Umfangs eine radial abstehende erste Abstützkontur 8b in der Form eines Nockens aufweist. Das lehnenfeste Abstützelement 8a ist vorliegend zusammen mit dem ersten Beschlagteil 11 am Lehnenholm 8 angeschweißt. Es sind aber auch andere Befestigungstechniken und/oder eine getrennte Befestigung der beiden Bauteile 8a, 11 am Lehnenholm 8 möglich. Mittels axialer Vorsprünge am lehnenfesten Abstützelement 8a, die formschlüssig mit entsprechenden Öffnungen im Lehnenholm 8 zusammenwirken, ist eine Vorpositionierung vor dem Schweißen möglich.

Das zweite Beschlagteil 12 ist fest mit dem Sitzrahmenseitenteil 7 verbunden, also sitzteilfest. Vorliegend weist das zweite Beschlagteil 12 hierfür einen Sternabsatz 12a auf, welcher formschlüssig in eine passende Öffnung des Sitzrahmenseitenteils 7 greift und mit diesem verschweißt ist. Das Sitzrahmenseitenteil 7 weist im Bereich der Befestigung des zweiten Beschlagteils 12 ein sitzteilfestes Abstützelement 7a auf, welches vorliegend ein gesondert (vom Sitzrahmenseitenteil 7) ausgebildetes und am Sitzrahmenseitenteil 7 befestigtes Bauteil ist, alternativ aber auch am Sitzrahmenseitenteil 7 angeformt sein kann, d.h. einstückig mit diesem ausgebildet sein kann. Das sitzteilfeste Abstützelement 7a ist vorliegend als Winkelprofil ausgebildet, welches mit seinem nach unten weisenden Schenkel in einem Winkel von etwa 23° zur Horizontalen am Sitzrahmenseitenteil angeschweißt ist, und welches an seinem anderen Schenkel auf seiner Oberseite eine zweite Abstützkontur 7b in der Form einer Rampe aufweist. Es sind aber auch andere Befestigungstechniken möglich. Zwischen dem sitzteilfesten Abstützelement 7a und der Öffnung für den Sternabsatz 12a (und damit dem zweiten Beschlagteil 12) weist das Sitzrahmenseitenteil 7 eine Deformationszone D auf. Die Deformationszone D soll sich im Crashfall verformen können, wobei eine solche Verformung durch Materialausspanmgen oder Materialschwächungen in der Deformationszone D gezielt herbeigeführt werden kann.

Im Normalfall sind die beiden Abstützkonturen 7b und 8b voneinander beabstandet, unabhängig davon, ob der Beschlag 10 verriegelt ist (oder nicht angetrieben wird) oder ob der Beschlag 10 entriegelt ist (oder angetrieben wird), um die Neigung der Lehne 4 einzustellen. Die Lehne 4 führt relativ zum Sitzteil 3 eine Schwenkbewegung um eine Achse A aus, die im Falle eines Beschlags 10 mit einem Exzenterumlaufgetriebe im Raum taumelt, andernfalls aber ortsfest ist. Es kann daher vorteilhaft sein, dass die beiden Abstützkonturen 7b und 8b um die ortsfeste Achse A gekrümmt sind, so dass ihr Abstand unabhängig von der Neigung der Lehne 4 ist. Im verriegelten (oder nicht angetriebenen) Zustand liegen ausschließlich die Beschläge 10 im Kraftfluss zwischen Lehne 4 und Sitzteil 3, d.h. alle auf die Lehne 4 ausgeübten Kräfte (beispielsweise die Gewichtskraft) werden ausschließlich mittels der Beschläge 10 in das Sitzteil 3 geleitet.

Im Crashfall erfährt die Lehne 4 eine Belastung, insbesondere ein Moment relativ zum Sitzteil 3, und zwar bei einem Frontcrash nach vorne und bei einem Heckcrash nach hinten. Um die Belastung des Beschlags 10 zu reduzieren, ist erfindungsgemäß eine Aufteilung des Kraftflusses vorgesehen, indem der Beschlag 10 bezüglich des Kraftflusses überbrückt wird. Hierzu wird eine gewollte Verformung des Sitzrahmenseitenteils 7 (und/oder des Lehnenholmes 8), insbesondere der in der Nachbarschaft des Beschlags 10 gelegenen Deformationszone D genutzt. Die Verformung der Deformationszone D bewirkt eine Energiedissipation. Aufgrund der Verformung der Deformationszone D gelangen auch die beiden Abstützelemente 7a und 8a mit ihren Abstützkonturen 7b und 8b in Anlage aneinander und schaffen so einen weiteren Weg für den Kraftfluss, welcher parallel (im schaltungstechnischen Sinne) zum Beschlag 10 liegt und damit diesen überbrückt. Die Momente auf den Beschlag 10 um alle drei Raumrichtungen können so reduziert werden. Vorliegend wird eine Reduktion der Belastung des Beschlags 10 um etwa 10 - 20 % erreicht. Die Anordnung der Deformationszone D und der beiden Abstützelemente 7a und 8a mit ihren Abstützkonturen 7b und 8b ist auf die erwartete Verformung der Deformationszone D aufgrund der wahrscheinlichsten Belastung abgestimmt. Sofern Frontcrash und Heckcrash abgedeckt werden sollen, können jeweils zwei erste Abstützkonturen 8b und zwei zweite Abstützkonturen 7b an jeweils einem gemeinsamen Abstützelement 8a oder 7a oder an jeweils einem eigenen Abstützelement 8a oder 7a vorgesehen sein. Es können auch mehrere Deformationszonen D im Bereich des Sitzrahmenseitenteils 7 und/oder des Lehnenholms 8 vorgesehen sein.

### Bezugszeichenliste

- 1: Fahrzeugsitz
- 3: Sitzteil
- 4: Lehne
- 7: Sitzrahmenseitenteil
- 7a: sitzteilfestes Abstützelement
- 7b: zweite Abstützkontur
- 8: Lehnenholm
- 8a: lehnenfestes Abstützelement
- 8b: erste Abstützkontur
- 10: Beschlag
- 11: erstes Beschlagteil
- 11a: Ringabsatz
- 12: zweites Beschlagteil
- 12a: Sternabsatz
- A: Achse
- D: Deformationszone

## Patentansprüche

1. Fahrzeugsitz, insbesondere Kraftfahrzeugsitz, mit
a) einem Sitzteil (3),
b) einer Lehne (4),
c) wenigstens einem Beschlag (10), mittels dessen die Lehne (4) schwenkbar am Sitzteil (3) angebracht ist, wobei der Beschlag (10) ein mit der Lehne (4) verbundenes erstes Beschlagteil (11) und ein mit dem Sitzteil (3) verbundenes zweites Beschlagteil (12) aufweist, wobei im Normalfall die Beschläge (10) im Kraftfluss zwischen Lehne (4) und Sitzteil (3) liegen, und
d) wenigstens einer Deformationszone (D), welche sich im Crashfall verformt, **dadurch gekennzeichnet, dass**
e) die Lehne (4) ein lehnenfestes Abstützelement (8a) und das Sitzteil (3) ein sitzteilfestes Abstützelement (7a) aufweisen, welche im Normalfall voneinander beabstandet sind und im Crashfall aufgrund der Verformung der Deformationszone (D) in Anlage aneinander gelangen, um einen weiteren Weg für den Kraftfluss zu schaffen, welcher parallel zum Beschlag (10) liegt, wobei die Deformationszone (D) zwischen dem zweiten Beschlagteil (12) und dem sitzteilfesten Abstützelement (7a) ausgebildet ist.

2. Fahrzeugsitz nach Anspruch 1, **dadurch gekennzeichnet, dass** die Lehne (4) als Teil ihrer tragenden Struktur wenigstens einen Lehnenholm (8) aufweist, an welchem das lehnenfeste Abstützelement (8a) vorgesehen ist.

3. Fahrzeugsitz nach Anspruch 2, **dadurch gekennzeichnet, dass** das lehnenfeste Abstützelement (8a) am Lehnenholm (8) angeformt ist.

4. Fahrzeugsitz nach einem der vorhergehenden Ansprüche, **dadurch gekennzeichnet, dass** das Sitzteil (3) als Teil seiner tragenden Struktur wenigstens ein Sitzrahmenseitenteil (7) aufweist, an welchem das sitzteilfeste Abstützelement (7a) vorgesehen ist.

5. Fahrzeugsitz nach Anspruch 4, **dadurch gekennzeichnet, dass** das sitzteilfeste Abstützelement (7a) am Sitzrahmenseitenteil (7) angeformt ist.

6. Fahrzeugsitz nach einem der vorhergehenden Ansprüche, **dadurch gekennzeichnet, dass** das - insbesondere ringförmige - lehnenfeste Abstützelement (8a) am ersten Beschlagteil (11) befestigt ist.

7. Fahrzeugsitz nach einem der vorhergehenden Ansprüche, **dadurch gekennzeichnet, dass** die beiden Beschlagteile (11, 12) relativ zueinander um eine Achse (A) verdrehbar sind.

8. Fahrzeugsitz nach Anspruch 7, **dadurch gekennzeichnet, dass** wenigstens eines der Abstützelemente (7a, 8a) um die Achse (A) gekrümmt ist.

9. Fahrzeugsitz nach einem der vorhergehenden Ansprüche, **dadurch gekennzeichnet, dass** wenigstens eines der Abstützelemente (7a, 8a) als Rampe ausgebildet ist.

## Claims

1. A vehicle seat, in particular a motor vehicle seat, having
a) a seat member (3),
b) a backrest (4),
c) at least one fitting (10) by means of which the backrest (4) is pivotably fitted to the seat member (3), wherein the fitting (10) has a first fitting member (11) which is connected to the backrest (4) and a second fitting member (12) which is connected to the seat member (3), wherein the fittings (10) are located in the force path between the backrest (4) and seat member (3) under normal circumstances and
d) at least one deformation zone (D) which deforms in the event of a crash,
**characterized in that**
e) the backrest (4) has a support element (8a) which is secured to the backrest and the seat member (3) has a support element (7a) which is secured to the seat member, which support elements are normally spaced apart from each other and which move into abutment with each other in the event of a crash as a result of the deformation of the deformation zone (D) in order to provide for the force path an additional path which is parallel with the fitting (10), wherein the deformation zone (D) is formed between the second fitting member (12) and the support element (7a) which is secured to the seat member.

2. The vehicle seat as claimed in claim 1, **characterized in that** the backrest (4) has as part of its carrying structure at least one backrest strut (8) on which the support element (8a) which is secured to the backrest is provided.

3. The vehicle seat as claimed in claim 2, **characterized in that** the support element (8a) secured to the backrest is formed on the backrest strut (8).

4. The vehicle seat as claimed in one of the preceding claims, **characterized in that** the seat member (3) has as part of its carrying structure at least one seat frame lateral portion (7) on which the support element (7a) which is secured to the seat member is provided.

5. The vehicle seat as claimed in claim 4, **characterized in that** the support element (7a) which is secured to the seat member is formed on the seat frame lateral portion (7).

6. The vehicle seat as claimed in one of the preceding claims, **characterized in that** the - in particular annular - support element (8a) which is secured to the backrest is secured to the first fitting member (11).

7. The vehicle seat as claimed in one of the preceding claims, that the two fitting members (11, 12) can be rotated relative to each other about an axis (A).

8. The vehicle seat as claimed in claim 7, **characterized in that** at least one of the support elements (7a, 8a) is curved about the axis (A).

9. The vehicle seat as claimed in one of the preceding claims, **characterized in that** at least one of the support elements (7a, 8a) is formed as a ramp.

## Revendications

1. Siège de véhicule, en particulier siège de véhicule automobile, comprenant
a) une partie de siège (3),
b) un dossier (4),
c) au moins une ferrure (10) au moyen de laquelle le dossier (4) est monté de manière pivotante sur la partie de siège (3), la ferrure (10) présentant une première partie de ferrure (11) connectée au dossier (4) et une deuxième partie de ferrure (12) connectée à la partie de siège (3), les ferrures (10), pendant un fonctionnement normal, étant dans le flux de forces entre le dossier (4) et la partie de siège (3), et
d) au moins une zone de déformation (D) qui se déforme en cas de collision,
**caractérisé en ce que**
e) le dossier (4) présente un élément d'appui (8a) fixé au dossier et la partie de siège (3) présente un élément d'appui (7a) fixé à la partie de siège, lesquels sont normalement espacés l'un de l'autre et viennent en appui l'un contre l'autre en cas de collision sous l'effet de la déformation de la zone de déformation (D), afin de créer une voie supplémentaire pour le flux de forces, laquelle est parallèle à la ferrure (10), la zone de déformation (D) étant réalisée entre la deuxième partie de ferrure (12) et l'élément d'appui (7a) fixé à la partie de siège.

2. Siège de véhicule selon la revendication 1, **caractérisé en ce que** le dossier (4) présente, en tant que partie de sa structure portante, au moins un longeron de dossier (8) au niveau duquel est prévu l'élément d'appui (8a) fixé au dossier.

3. Siège de véhicule selon la revendication 2, **caractérisé en ce que** l'élément d'appui (8a) fixé au dossier est façonné au niveau du longeron de dossier (8).

4. Siège de véhicule selon l'une quelconque des revendications précédentes, **caractérisé en ce que** la partie de siège (3) présente, en tant que partie de sa structure portante, au moins une partie latérale de cadre de siège (7) au niveau de laquelle est prévu l'élément d'appui (7a) fixé à la partie de siège.

5. Siège de véhicule selon la revendication 4, **caractérisé en ce que** l'élément d'appui (7a) fixé à la partie de siège est façonné au niveau de la partie latérale de cadre de siège (7).

6. Siège de véhicule selon l'une quelconque des revendications précédentes, **caractérisé en ce que** l'élément d'appui (8a) fixé au dossier - en particulier sous forme annulaire - est fixé au niveau de la première partie de ferrure (11).

7. Siège de véhicule selon l'une quelconque des revendications précédentes, **caractérisé en ce que** les deux parties de ferrure (11, 12) peuvent tourner l'une par rapport à l'autre autour d'un axe (A).

8. Siège de véhicule selon la revendication 7, **caractérisé en ce qu'**au moins l'un des éléments d'appui (7a, 8a) est courbé autour de l'axe (A).

9. Siège de véhicule selon l'une quelconque des revendications précédentes, **caractérisé en ce qu'**au moins l'un des éléments d'appui (7a, 8a) est réalisé sous forme de rampe.
